Europäisches Patentamt

European Patent Office

Office européen des brevets

(19)

(11) Numéro de publication: **0 053 980**
**A1**

(12) **DEMANDE DE BREVET EUROPEEN**

(21) Numéro de dépôt: **81401925.3**

(22) Date de dépôt: **03.12.81**

(51) Int. Cl.³: **A 43 C 15/08**
**B 60 C 11/14**

(30) Priorité: **05.12.80 FR 8026041**

(43) Date de publication de la demande:
**16.06.82 Bulletin 82/24**

(84) Etats contractants désignés:
**AT BE CH DE GB IT LI LU NL SE**

(71) Demandeur: **Le Coent, Fernand**
**1, Avenue des Lilas**
**Thouaré F-44470 Carquefou(FR)**

(71) Demandeur: **Figureau, Jean R.**
**6 rue de Trianon**
**F-44140 Vieillevigne(FR)**

(72) Inventeur: **Le Coent, Fernand**
**1, Avenue des Lilas**
**Thouaré F-44470 Carquefou(FR)**

(72) Inventeur: **Figureau, Jean R.**
**6 rue de Trianon**
**F-44140 Vieillevigne(FR)**

(74) Mandataire: **Phélip, Bruno et al,**
**c/o Cabinet Harlé & Phélip 21, rue de La Rochefoucauld**
**F-75009 Paris(FR)**

(54) Dispositif anti-dérapant escamotable, et semelle de chaussure et pneumatique munis d'un tel dispositif anti-dérapant.

(57) L'invention concerne les dispositifs anti-dérapants esca-motables destinés aux semelles de chaussures et aux bandes de roulement des pneumatiques. Selon l'invention, une plaquette métallique carrée ou rectangulaire 1 a, à une extrémité, une ligne de griffes 2 et, dans le prolongement de l'autre extrémité, deux saillies latérales 3 formant des axes de pivotement qui sont logés dans des paliers de section rectangulaire sensiblement égale à celle des saillies. La stabilité de positionnement de la plaquette dans l'une de ses deux positions opposées à 180° est assurée par la pression appliquée par le matériau de la semelle ou du pneumatique sur les axes de pivotement de la plaquette. Application aux semelles de chaussures et aux pneumatiques des véhicules.

fig.1

EP 0 053 980 A1

## Dispositif anti-dérapant escamotable, et semelle de chaussure et pneumatique munis d'un tel dispositif anti-dérapant.

La présente invention des équipements adaptables aux semelles de chaussures ou aux pneumatiques de véhicules afin de leur conférer une bonne adhérence sur des sols enneigés et verglacés.

On connaît la difficulté de se déplacer sur un sol enneigé ou recouvert de verglas, soit à pied, soit à bord d'un véhicule équipé de pneumatiques. Pour ces derniers, il est connu d'utiliser des équipements à chaînes adaptables aux pneumatiques normaux ou de substituer à ces derniers des pneumatiques cloutés, la bande de roulement comportant incorporés à la gomme des crampons métalliques. Cette dernière solution présente l'inconvénient de dégrader les revêtements routiers en-dehors des zones enneigées. De plus, leur utilisation est liée à une autorisation des pouvoirs publics. En ce qui concerne les chaussures et notamment, les chaussures de ville, il est connu de placer sous les semelles à l'aide de courroies, des plaquettes métalliques munies de griffes. Si cette solution résout en partie la tenue des personnes sur le sol, elle ne rend pas pour autant la marche facile compte tenu de la saillie importante du dispositif par rapport à la semelle mettant celle-ci en position de bascule. Dans le cas particulier des stations de sports d'hiver, les personnes devant se rendre à pied de leur lieu de logement aux installations de remontée pour accéder aux pistes éprouvent des difficultés de marche : pour y remédier, elles chaussent directement leurs chaussures de ski avec les inconvénients que celles-ci présentent à la marche, tant sur la neige et le verglas que sur les sols d'habitation ou d'hôtel.

Le brevet des Etats-Unis d'Amérique n° 2 952 927 décrit un dispositif anti-dérapant destiné à être monté sur une semelle de chaussure. Ce dispositif comporte une plaquette métallique ayant une griffe d'un côté et, de l'autre côté, deux saillies plates dépassant radialement. Ces saillies latérales sont disposées dans des logements de section sensiblement circulaire, formés par deux plaques raccordées sur des bords parallèles à l'axe de ces logements. De cette manière, les deux côtés de ces logements sensiblement circulaires peuvent s'écarter légèrement d'une manière élastique. L'une des plaques sert de butée déterminant une première position de la plaquette. Dans cette première position, la plaquette est retenue par application de forces d'élasticité par les deux plaques sur la tranche des saillies latérales et non sur leur plat. Dans une seconde position rabattue, la plaquette a tourné de 90°. Ce brevet ne décrit pas de logements de forme non circulaire, formés dans un matériau élastique. Il ne décrit pas non plus une plaquette ayant des positions stables différant de 180° environ.

Le brevet français n° 2 076 475 et les brevets des Etats-Unis d'Amérique n° 2 920 403 et 2 065 386 décrivent d'autres dispositifs anti-dérapants. Aucun de ces dispositifs ne comporte de logement de section non circulaire, pouvant se déformer élastiquement.

Le dispositif suivant l'invention permet d'éviter les inconvénients précités. Avec celui-ci, il est possible de se déplacer normalement soit à pied, soit à bord d'un véhicule, sur un sol ou sur des routes enneigées ou verglacées, sans avoir à équiper les chaussures ou les pneumatiques traditionnels ou à procéder à leur remplacement, le dispositif incorporé aux chaussures ou aux pneumatiques pouvant être rapidement mis en service ou escamoté à volonté.

Plus précisément, l'invention concerne un dispositif anti-dérapant escamotable incorporé à une semelle de chaussure ou à une bande de roulement d'un pneumatique afin de conférer à ceux-ci une bonne adhérence sur des sols enneigés ou verglacés ; selon l'invention, ce dispositif comprend une plaquette métallique ayant deux arêtes sensiblement parallèles dont l'une comporte une ligne de saillies ou de dents recourbées et dont l'autre comporte, dans son prolongement ou à proximité, deux saillies latérales plates parallèles à cette autre arête et formant un axe de pivotement X-Y de la plaquette, les saillies plates s'inscrivant chacune dans un logement de section non circulaire formant palier, les logements étant formés par moulage dans la matière constituant la semelle de la chaussure ou la bande de roulement du pneumatique et bordant latéralement une cavité réalisée dans cette matière et destinée à loger la plaquette, cette dernière pouvant prendre deux positions stables par pivotement d'un angle légèrement inférieur à 180°, une première position étant telle que la ligne de griffes ou de dents est en saillie par rapport à la face normale d'appui au sol de la semelle de chaussure ou de la bande de roulement du pneumatique, et une seconde position étant telle que cette ligne de griffes ou de dents est en retrait par rapport à la face normale d'appui, le pivotement des saillies dans leur logement provoquant la déformation élastique du matériau constituant la semelle de la chaussure ou la bande de roulement du pneumatique.

Il est avantageux que chacun des logements de section non circulaire ait une section rectangulaire sensiblement égale à celle des saillies de la plaquette.

Il est aussi avantageux que la stabilité du positionnement de la plaquette dans l'une ou l'autre des deux positions soit obtenue par les pressions de contact permanentes qu'exerce le matériau constituant la semelle de chaussure ou la bande de roulement du pneumatique sur les saillies, et par la mise en appui d'au moins une arête transversale de la plaquette sur le fond de la cavité.

Le fond de la cavité dans laquelle s'inscrit la plaquette est avantageusement plat dans la zone située entre l'axe de pivotement X-Y des saillies et l'extrémité de la cavité dans laquelle se logent les dents de la plaquette lorsque celle-ci est dans la seconde position, et est cambré dans la zone située de l'autre côté de l'axe de pivotement X-Y afin que les dents de la plaquette soient en saillie lorsque la plaquette est dans sa première position.

Il est aussi avantageux que le côté de la plaquette opposé aux griffes porte un patin de matière anti-dérapante, à faible coefficient de glissement, éventuellement muni de reliefs évitant tout risque de glissement sur sol sec lorsque la plaquette est dans sa seconde position et à la suite d'une usure relative de la semelle et de la bande de roulement.

L'invention concerne aussi une semelle de chaussure équipée d'au moins un dispositif ahti-dérapant incorporé et escamotable tel que décrit précédemment.

Elle concerne aussi un pneumatique dont la bande de roulement est équipée de dispositifs anti-dérapants incorporés et escamotables du type décrit précédemment.

Les dessins annexés illustrent, à titre d'exemple, un mode de réalisation du dispositif conforme à la présente invention, et quelques variantes d'utilisation. Dans ceux-ci :

la figure 1 représente vue en coupe longitudinale une plaquette en position de non utilisation, en retrait par rapport à la surface normale d'appui au sol,

la figure 2 représente vue en coupe longitudinale la même plaquette en position d'utilisation en saillie par rapport à la surface normale d'appui au sol,

la figure 3 représente, vue en coupe longitudinale, la semelle d'une chaussure équipée de deux dispositifs selon l'invention en position d'utilisation,

la figure 4 représente une vue de dessous de la même semelle, le dispositif équipant le talon étant en position de non utilisation,

la figure 5 représente une vue partielle en perspective cavalière d'une bande de roulement d'un pneumatique équipé du dispositif en position d'utilisation.

Tel qu'il est représenté, le dispositif consiste en une plaquette de métal 1 carrée ou rectangulaire dont le découpage et l'emboutissage permettent d'obtenir sur l'une de ses arêtes une ligne de griffes ou de dents recourbées 2, et en prolongement de l'arête opposée ou à proximité et en parallèle de celle-ci deux saillies latérales 3 destinées à réaliser deux axes plats de pivotement autour d'un axe fictif horizontal X-Y. Ces deux axes s'inscrivent dans un logement borgne de section rectangulaire égale à celle desdits axes, obtenu au moulage ou à l'injection de la matière constituant la semelle ou la bande de roulement du pneumatique, ces deux logements réalisant une sorte de palier bordant une cavité 4 réalisée dans ladite matière et dans laquelle s'inscrit la plaquette 1. La disposition de ces logements, section rectangulaire disposée à plat, correspond approximativement à l'une ou l'autre des positions d'utilisation de la plaquette, obtenues par pivotement de celle-ci d'une valeur angulaire légèrement inférieure à 180°, lequel pivotement place la ligne de griffes ou de dents 2 en saillie ou en retrait position retournée par rapport à la face normale d'appui au sol de la semelle de chaussure ou de la bande de roulement du pneumatique.

La stabilité du positionnement de la plaquette dans l'une ou l'autre de ces positions est obtenue par les pressions de contact permanentes qu'exerce le matériau constituant la semelle ou le pneumatique sur les axes de pivotement et par la mise en appui de l'une ou de l'autre des arêtes transversales de la plaquette sur le fond de la cavité 4 ou par les deux à la fois. Cette stabilité est accrue lorsque l'axe de pivotement est déporté par rapport à l'arête de la plaquette par formation d'un talon. Le fond de la cavité 4a est plat dans la zone située entre l'axe fictif de pivotement X-Y et l'extrémité de la cavité dans laquelle vient se loger l'extrémité de la plaquette munie de dents en position de non utilisation; dans la zone située de l'autre côté de l'axe X-Y, le fond de la cavité 4b est cambré de façon à favoriser la saillie des dents de la plaquette en position d'utilisation. La rotation des axes de pivotement dans leur logement n'est rendue possible que par la déformation élastique dudit matériau dans la zone d'encastrement de ces axes, par intervention manuelle sur la plaquette. A cet effet, celle-ci peut comporter une languette débordante facilitant sa préhension.

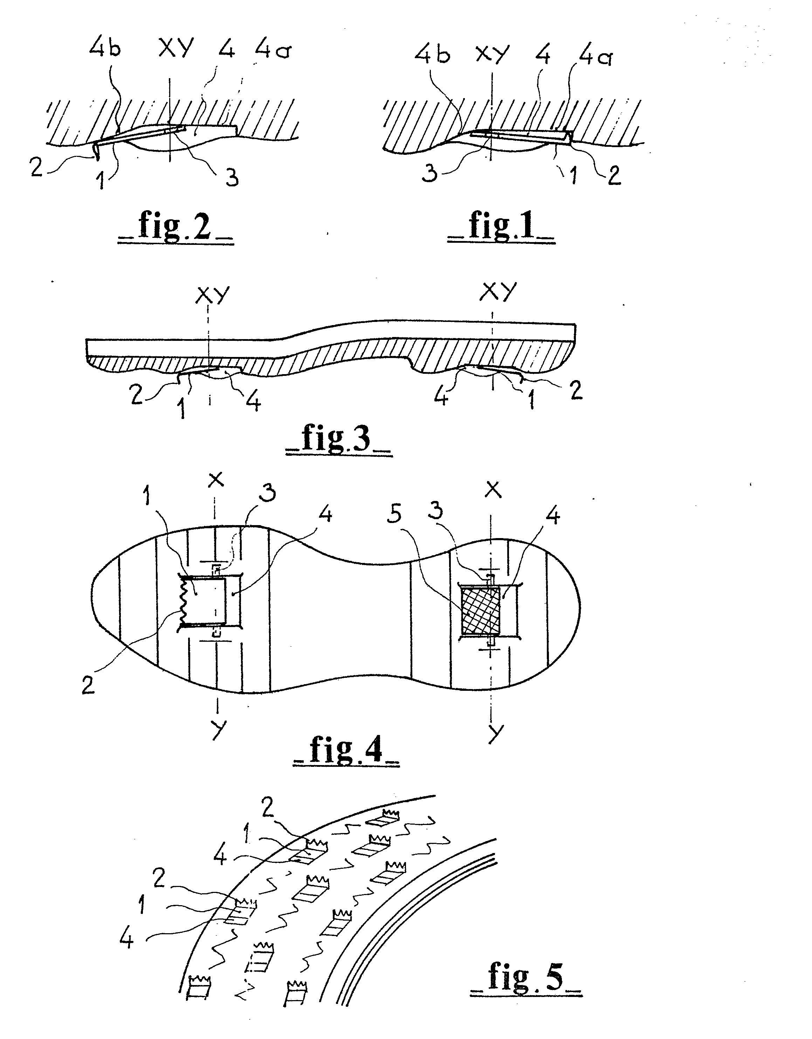

Tel que représenté en figure 1, la plaquette en position de non-utilisation se trouve en retrait par rapport à la face d'appui normale. Dans le cas d'application aux semelles de chaussure et pour éviter que la face correspondant au dos de la plaquette ne devienne une source de glissement de la chaussure sur un sol tel que du carrelage par exemple, à la suite d'une relative usure des reliefs de la semelle, il peut être envisagé de recouvrir ce dos de la plaquette,côté opposé aux griffes,d'un patin 5 en matière anti-dérapante à faible coefficient de glissement éventuellement muni de reliefs, tel que représenté en figure 4.

La figure 5 illustre le cas d'utilisation de dispositifs tels que décrits, disposés en lignes circulaires parallèles sur la bande de roulement d'un pneumatique, les dispositifs étant répartis en quinconce d'une ligne à l'autre. L'utilisateur de tels pneumatiques, peut, par effacement des griffes, rouler à vitesse normale dès qu'il se retrouve sur des routes sèches. De même, les personnes circulant à pied, munies de chaussures équipées de dispositifs selon l'invention, peuvent accéder à l'intérieur de toute habitation sans avoir à se déchausser, la seule intervention qu'elles aient à effectuer étant celle permettant d'escamoter lesdits dispositifs.

L'invention ne se limite aucunement au mode de réalisation et d'utilisation du dispositif spécialement décrit. Elle embrasse toutes les variantes possibles à condition que celles-ci ne soient pas en contradiction avec l'objet de chacune des revendications annexées à la présente description.

C'est ainsi que l'arête active du dispositif peut être différente et qu'à la ligne de griffes ou de dents il peut être substitué tout profil permettant un bon ancrage au sol, tel que par exemple, un profil en demi-cercle ou en vé. De même, l'équipement d'une semelle de chaussure peut comporter un nombre quelconque de dispositifs, ceux-ci assurant, selon leur disposition,soit un ancrage pour la marche en avant, soit une retenue pour freiner ou interdire tout glissement.

Le dispositif, objet de l'invention, peut être utilisé dans la fabrication de tous types de chaussures, aux sports d'hiver, à la ville, ainsi que dans la fabrication de pneumatiques pour véhicules notamment dans les pays aux conditions atmosphériques favorables à l'enneigement ou à la formation de verglas.

REVENDICATIONS

1.      Dispositif anti-dérapant escamotable incorporé à une semelle de chaussure ou à une bande de roulement d'un pneumatique afin de conférer à ceux-ci une bonne adhérence sur des sols enneigés ou verglacés, caractérisé en ce qu'il comprend une plaquette (1) de métal ayant deux arêtes sensiblement parallèles dont l'une comporte une ligne de saillies ou de dents recourbées (2), et dont l'autre comporte, dans son prolongement ou à proximité, deux saillies latérales plates (3) parallèles à cette autre arête et formant un axe de pivotement (X-Y) de la plaquette, les saillies plates (3) s'inscrivant chacune dans un logement de section non circulaire formant palier, les logements étant formés par moulage dans la matière constituant la semelle de la chaussure ou la bande de roulement du pneumatique et bordant latéralement une cavité (4) réalisée dans ladite matière et destinée à loger la plaquette, cette dernière pouvant prendre deux positions stables par pivotement d'un angle légèrement inférieur à 180°, une première position étant telle que la ligne de griffes ou de dents (2) est en saillie par rapport à la face normale d'appui au sol de la semelle de chaussure ou de la bande de roulement du pneumatique, et une seconde position étant telle que cette ligne de griffes ou de dents (2) est en retrait par rapport à ladite face normale d'appui, le pivotement des saillies (3) dans leur logement provoquant la déformation élastique du matériau constituant la semelle de la chaussure ou la bande de roulement du pneumatique.

2.      Dispositif selon la revendication 1, caractérisé en ce que chacun des logements de section non circulaire a une section rectangulaire sensiblement égale à celle des saillies (3) de la plaquette.

3.      Dispositif selon l'une des revendications 1 et 2, caractérisé en ce que la stabilité du positionnement de la plaquette (1) dans l'une ou l'autre des deux positions est obtenue par les pressions de contact permanentes qu'exerce le matériau constituant la semelle de chaussure ou la bande de roulement du pneumatique sur les saillies (3) et par la mise en appui d'au moins une arête transversale de la plaquette (1) sur le fond de la cavité (4).

4. Dispositif selon l'une quelconque des revendications 1 à 3, caractérisé en ce que le fond de la cavité (4) dans laquelle s'inscrit la plaquette est plat dans la zone (4a) située entre l'axe de pivotement (X-Y) des saillies (3) et l'extrémité de la cavité (4) dans laquelle se logent les dents (2) de la plaquette (1) lorsque celle-ci est dans sa seconde position, et est cambré dans la zone (4b) située de l'autre côté de l'axe de pivotement (X-Y) afin que les dents (2) de la plaquette (1) soient en saillie lorsque la plaquette est dans sa première position.

5. Dispositif selon l'une quelconque des revendications 1 à 4, caractérisé en ce que le côté de la plaquette (1) opposé aux griffes porte un patin (5) de matière anti-dérapante à faible coefficient de glissement, éventuellement muni de reliefs évitant tout risque de glissement sur sol sec lorsque la plaquette est dans sa seconde position et à la suite d'une usure relative de la semelle ou de la bande de roulement.

6. Semelle de chaussure, caractérisée en ce qu'elle est équipée d'au moins un dispositif anti-dérapant incorporé et escamotable selon l'une quelconque des revendications 1 à 5.

7. Pneumatique, caractérisé en ce que sa bande de roulement est équipée de dispositifs anti-dérapants incorporés et escamotables selon l'une quelconque des revendications 1 à 5.

_fig.2_

_fig.1_

_fig.3_

_fig.4_

_fig.5_

Office européen
des brevets

**RAPPORT DE RECHERCHE EUROPEENNE**

| Catégorie | Citation du document avec indication, en cas de besoin, des parties pertinentes | Revendication concernée |
|---|---|---|
| D,Y | US - A - 2 952 927 (F. GAU) | 1,2,3 |
| D,Y | FR - A - 2 076 475 (R. IMBERTECHE) | 1,6 |
| D,Y | US - A - 2 920 403 (A. L'ETOILE) | 1,6 |
| D,Y | US - A - 2 065 386 (J. MATTSON) | 1,6 |
| A | US - A - 3 120 255 (P. COPPOLA) | |
| A | FR - A - 2 343 618 (G. RIES) | |
| | * revendications; figures * | |
| | -- | |
| A | FR - A - 436 686 (E. WEGMANN) | |
| A | FR - A - 909 282 (E. MARTENET) | |
| | ---------------- - | |

## DOCUMENTS CONSIDERES COMME PERTINENTS

**CLASSEMENT DE LA DEMANDE (Int. Cl. ³)**

A 43 C 15/08
B 60 C 11/14

**DOMAINES TECHNIQUES RECHERCHES (Int. Cl. ³)**

A 43 C
B 60 C

**CATEGORIE DES DOCUMENTS CITES**

X: particulièrement pertinent à lui seul
Y: particulièrement pertinent en combinaison avec un autre document de la même catégorie
A: arrière-plan technologique·
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 05-03-1982 | DECLERCK |

OEB Form 1503.1  06.78